# EUROPEAN PATENT SPECIFICATION

(11) **EP 1 323 562 B1**
(45) Date of publication and mention of the grant of the patent: **19.11.2008**
(21) Application number: 02396182.4
(22) Date of filing: 09.12.2002
(51) Int. Cl.: B60J 7/20, B62D 25/12

(54) **Trunk lid arrangement**
Kofferraumdeckel-Anordnung
Dispositif d'un couvercle de coffre

(30) Priority: 13.12.2001 FI 20012465
(43) Date of publication of application: 02.07.2003
(73) Proprietor: Valmet Automotive Oy, 23501 Uusikaupunki (FI)
(72) Inventor: Mattila, Jari, c/o Valmet Automotive Oy, 23501 Uusikaupunki (FI)
(74) Representative: Tanskanen, Jarmo Tapio

(56) References cited:
- DE-C- 4 445 944
- US-B1- 6 186 577
- US-B1- 6 193 300
- PATENT ABSTRACTS OF JAPAN vol. 2000, no. 11, 3 January 2001 (2001-01-03) & JP 2000 211373 A (TAKADA KOGYO KK), 2 August 2000 (2000-08-02)

## Description

The present invention relates to a trunk lid arrangement as defined in the preamble of claim 1.

In prior art, patent specifications US 5,823,606, US 6,092,335, US 6,250,707 and US 6,293,605 disclose trunk lid arrangements for convertible cars, wherein the trunk lid is openable in a conventional manner so that it can be turned from a closed position to a first opened position inclined in relation to the body of the convertible, this position giving admission into the trunk space (tailgate opening function carried out by lifting the rear end of the lid). In addition to this, the trunk lid can be alternatively turned into a second opened position inclined in relation to the body, which allows the foldable roof to be lowered from the front side of the trunk lid into a boot in the trunk and similarly to be raised from said boot (trunk lid opening function carried out by lifting the front end of the lid). The lid is turned using an actuating mechanism, by means of which the lid has been mounted on the body so as to allow it to be turned between the closed position and the first position or alternatively the second position.

In specification US 5,823,606, the trunk lid is mounted on the forepart of an auxiliary frame by means of a scissors-type parallelogram mechanism. The auxiliary frame is again pivotally mounted by its rear end on the rear part of the trunk. Opening of the tailgate is accomplished by using the parallelogram mechanism, and the lid of the trunk space is opened by turning the auxiliary frame, the lid being opened without utilizing the tailgate actuating mechanism. The tailgate mechanism is entirely over the auxiliary frame mechanism. A problem with such a solution is that the construction is complicated, containing many components. In addition, it requires many locking devices for locking the components to each other and to the body of the vehicle. When the tailgate is in the closed position, the linkages of the mechanisms are situated in a place that receives the widest part of the roof in its lowered position.

Specification US 6,250,707 discloses a trunk lid arrangement that also uses an auxiliary frame. The trunk lid is mounted on the auxiliary frame by means of a front four-bar mechanism and the auxiliary frame is mounted on the body of the convertible by means of a rear four-bar mechanism. The tailgate function is implemented using the front four-bar mechanism and trunk lid opening function using the rear four-bar mechanism. The front and rear four-bar mechanisms have a common lever. A problem with this solution is that the mechanism is complicated and contains a large number of components. Moreover, it requires the use of many locking devices for locking the components to each other and to the vehicle body. When the tailgate is closed, the linkages comprised in the mechanisms are of the mechanisms are situated in a place that receives the widest part of the roof in its lowered position.

Specification US 6,092,335 discloses a trunk lid arrangement where the front and rear edges of the lid are connected to the bodyshell of the vehicle by latches. When the tailgate function is to be used, the latches of the front edge hinges of the lid are locked so as to allow the rear end to be lifted. Similarly, when the latches of the rear edge hinges are locked, the front end can be lifted. A problem with this solution is that it imposes considerable limitations regarding the design of the roof and rear of the vehicle. In addition, tightening the seams in the structure is difficult. When used as a tailgate, the tailgate front edge penetrates the rear part of the roof. To make this solution workable, the tailgate pivot would have to be disposed outside the bodyshell surface or the structure would have to be provided with a linkage hinge at the front end.

Specification US 6,293,605 discloses a tonneau arrangement where the tonneau is supported on the body of a convertible by a three-bar linkage mechanism in which the hinges of the front end of the tonneau linking it to the body are arranged to be movable along longitudinal guide tracks, allowing the tonneau to be moved rearwards so as to enable the roof to be lowered and raised into/from a stowage provided in the trunk space. A problem with this solution is that the structure imposes considerable limitations regarding the design of the roof and rear part of the vehicle. As the trunk lid has to slide very far rearwards to allow the roof to be lowered, the guide tracks must also extend relatively far in the rearward direction. Since the vehicle width diminishes towards the rear and the tracks have to be laid in direction of motion of the lid, the tracks easily form a significant limitation regarding the width of the vehicle.

In specification US 6,193,300, the tailgate movement is implemented using a slider mechanism. When the tailgate is actuated to open the trunk lid to allow the roof to be lowered, the tailgate is moved by its front edge by means of the same tailgate mechanism, but the front-side hinge of the tailgate is released and only the rearward hinge of the mechanism remains engaged. By this actuation system, the tailgate is moved separately by its rear end by turning it about the rear-edge hinge mechanism. The latch of the tailgate remains locked to this sliding hinge mechanism. The problem with this solution, too, is complicated construction.

The object of the invention is to eliminate the above-mentioned drawbacks.

A specific object of the invention is to disclose a trunk lid arrangement in which the number of components in the actuating mechanism is as small as possible.

A further object of the invention is to disclose a trunk lid arrangement in which the actuating mechanism occupies as little space and is as light as possible.

Yet another object of the invention is to disclose a trunk lid arrangement in which the trunk lid can be locked using a conventional trunk lid latch without any other locking arrangements.

The trunk lid arrangement of the invention is characterized by what is presented in claim 1.

The trunk lid arrangement of the invention comprises a trunk lid which can be turned from a closed position into a first opened position inclined with respect to the body of the convertible and allowing access to the trunk from the rear or alternatively into a second opened position inclined with respect to the body and allowing the folding roof to be lowered from the front side of the trunk lid into a roof stowage space provided in the trunk and correspondingly to be raised from said stowage space, and an actuating mechanism connecting the trunk lid to the body so as to allow it to be turned between the closed position and alternatively the first position or the second position.

According to the invention, the actuating mechanism comprises function mode changing means for setting the functioning mode of the actuating mechanism either to a four-bar linkage mode for turning the trunk lid between the closed position and the first opened position or alternatively to a five-bar linkage mode for turning the trunk lid between the closed position and the second opened position.

The invention provides the advantage that the number of components in the actuating mechanism is as small as possible as the two linkage mechanisms use the same bars. The actuating mechanism can be so constructed that it will be as narrow and light as possible and take up as little space as possible. Locking of the trunk lid with respect to the body can be achieved using a conventional trunk lid latch that locks the trunk lid by its rear part without using any other locking arrangements. The trunk lid is always firmly supported by the actuating mechanism because both the four-bar and the five-bar linkage mechanisms always have two pivots attached to the roof. The trunk lid actuating mechanism imposes no limitations regarding the shape or width of the roof as the actuating mechanism can be disposed behind the widest part of the roof in its lowered position.

In an embodiment of the trunk lid arrangement, the actuating mechanism comprises a front lever and a rear lever, which are pivotally connected to the body and to the trunk lid.

In an embodiment of the trunk lid arrangement, the function mode changing means comprise an operating lever pivotally connected by a first joint at one end to the body or to a fixed structure relative to the body.

In an embodiment of the trunk lid arrangement, the lower end of the front lever is pivotally connected by a second joint to the operating lever at a distance from the first joint, and the upper end is pivotally connected by a third joint to the trunk lid; and the upper end of the rear lever is pivotally connected by a fourth joint to the trunk lid, and its lower end is pivotally connected by a fifth joint to the body or to an immovable structure relative to the body at a distance from the first joint.

In an embodiment of the trunk lid arrangement, the function mode changing means comprise a connecting element pivotally connected at one end by a sixth joint to the rear lever and at the other end by a seventh joint to the operating lever.

In an embodiment of the trunk lid arrangement, the function mode changing means comprise holding means for holding the operating lever immovable to allow the actuating mechanism to be used as a four-bar linkage mechanism comprising pivots consisting of the second, third, fourth and fifth joints for moving the trunk lid between the first and second positions.

In an embodiment of the trunk lid arrangement, the actuating mechanism comprises a power means for turning the operating lever, and when the operating lever is being turned, the actuating mechanism functions as a five-bar linkage mechanism controlled in a pre-defined way by the connecting element and having pivots consisting of the first, second, third, fourth and fifth joints, for moving the trunk lid between the first position and the third position.

In an embodiment of the trunk lid arrangement, the holding means for holding the operating lever immovable consist of a power means of self-locking type.

In an embodiment of the trunk lid arrangement, the power means of self-locking type is a linear motor, a self-locking hydraulic cylinder or the like. The locking can also be accomplished using a linkage that goes over the top dead center.

In an embodiment of the trunk lid arrangement, the holding means for holding the operating lever immovable comprise a locking means that is separate from the power means.

In an embodiment of the trunk lid arrangement, the rear lever and the connecting element are connected to each other via a pin-slot mechanism consisting of a pin connected to the lever at a distance from the fifth joint and a circular-arc shaped slot in the connecting element, allowing the pin to move in the slot. When the pin is at an extreme end of the slot, the pin leaning against the slot extremity forms a sixth joint between the lever and the connecting element for five-bar operation, while in four-bar operation, the operating lever and the connecting element pivoted on it being held immovable, the pin-slot mechanism permits the rear lever to turn in relation to the connecting element remaining immovable.

In an embodiment of the trunk lid arrangement, the actuating mechanism comprises a locking element fitted to lock the pin at said extreme end of the slot to form said sixth joint so that the pin is prevented from moving in the slot.

In an embodiment of the trunk lid arrangement, the distance between the pivotal axes of the first joint and the seventh joint is different from the distance between the pivotal axes of the fifth joint and the sixth joint.

In an embodiment of the trunk lid arrangement, the distance between the pivotal axes of the first joint and the seventh joint is smaller than the distance between the pivotal axes of the fifth joint and sixth joint, in which case the angular velocity of the rear lever is lower than the angular velocity of the operating lever.

In the following, the invention will be described in detail by the aid of embodiment examples with reference to the attached drawings, wherein
Fig. 1 presents an embodiment of the trunk lid arrangement of the invention in a position corresponding to the closed position of the trunk lid, as in Fig. 9 and 13, with the operating lever held immovable and the actuating mechanism functioning as a four-bar mechanism,
Fig. 2 presents a diagram representing the actuating mechanism of Fig. 1 in a corresponding position,
Fig. 3 presents the actuating mechanism of Fig. 1 in the first opened position of the trunk lid, as in Fig. 10 and 14, with the operating lever held immovable, in which situation the actuating mechanism functions as four-bar mechanism,
Fig. 4 presents a diagram representing the actuating mechanism of Fig. 3 in a corresponding position,
Fig. 5 presents the actuating mechanism of Fig. 1-4 in a position corresponding to the closed position of the trunk lid, as in Fig. 9 and 13, in which position the operating lever is free to be turned by the power means into the position shown in Fig. 11 and 12 and the actuating mechanism functions as a five-bar mechanism,
Fig. 6 presents a diagram representing the actuating mechanism of Fig. 5 in a corresponding position,
Fig. 7 presents the actuating mechanism of Fig. 5 in a position corresponding to the second opened position of the trunk lid as shown in Fig. 11 and 12, with the operating lever turned by the power means and the actuating mechanism functioning as a five-bar mechanism,
Fig. 8 presents a diagram representing the actuating mechanism of Fig. 7 in a corresponding position,
Fig. 9 presents a diagrammatic side view of a part of a convertible with the folding roof extended over the passenger space and the trunk lid in the closed position,
Fig. 10 presents the convertible of Fig. 9 with the roof in a closed position and the trunk lid in a first opened position,
Fig. 11 presents the convertible of Fig. 9 with the trunk lid in a second opened position allowing the roof to be lowered into its stowage space,
Fig. 12 presents the convertible of Fig. 9 with the roof lowered into the stowage and the trunk lid still in the second opened position,
Fig. 13 presents the convertible of Fig. 9 with the roof lowered into the stowage and lid in the closed position,
Fig. 14 presents the convertible of Fig. 9 with the roof lowered into the stowage and lid in the first opened position,
Fig. 15 presents a diagrammatic section XV-XV through Fig. 1 with the arrangement provided with an external device for locking the operating lever,
Fig. 16 presents the actuating mechanism of Fig. 1 - 14 in an oblique rear view.

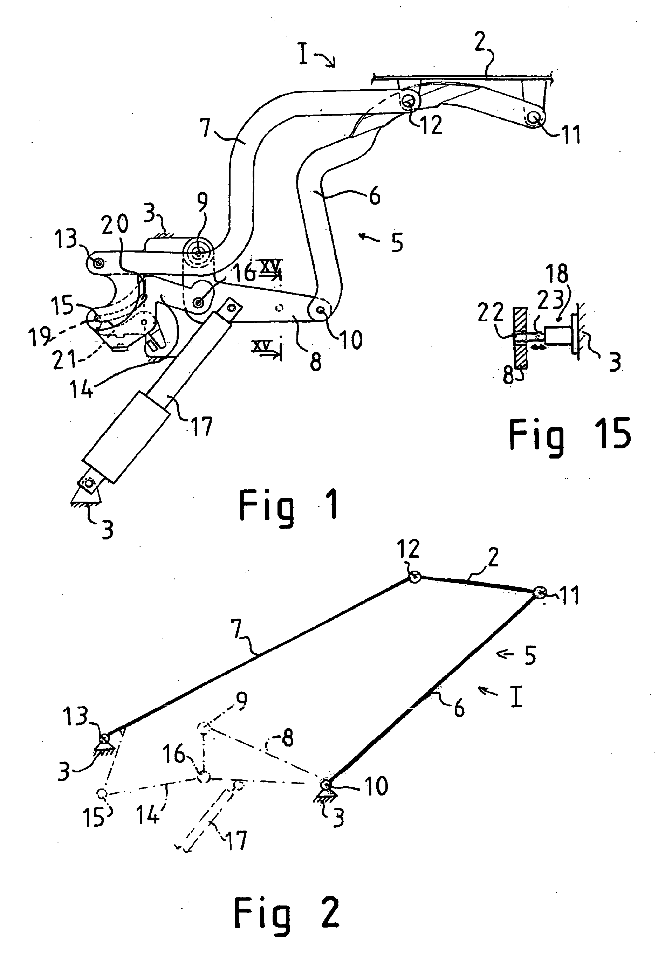

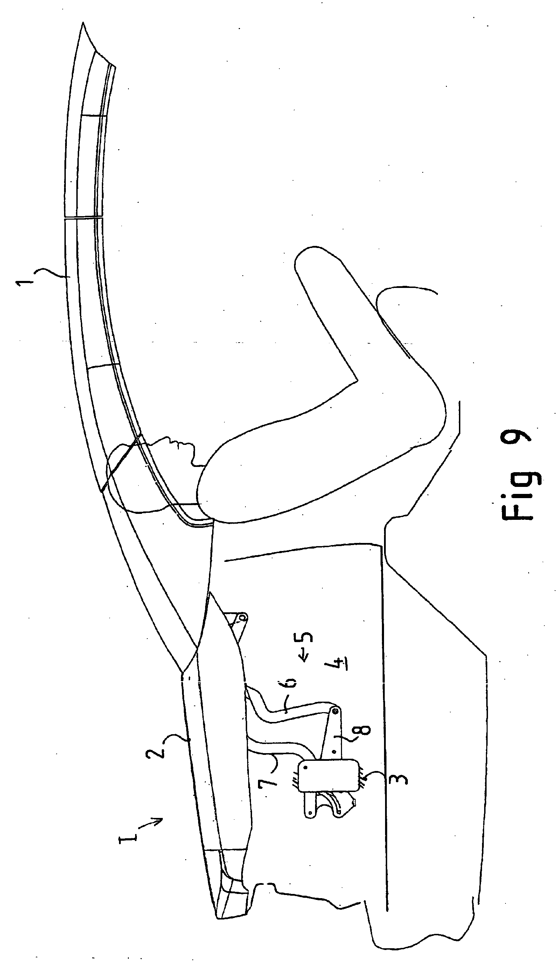

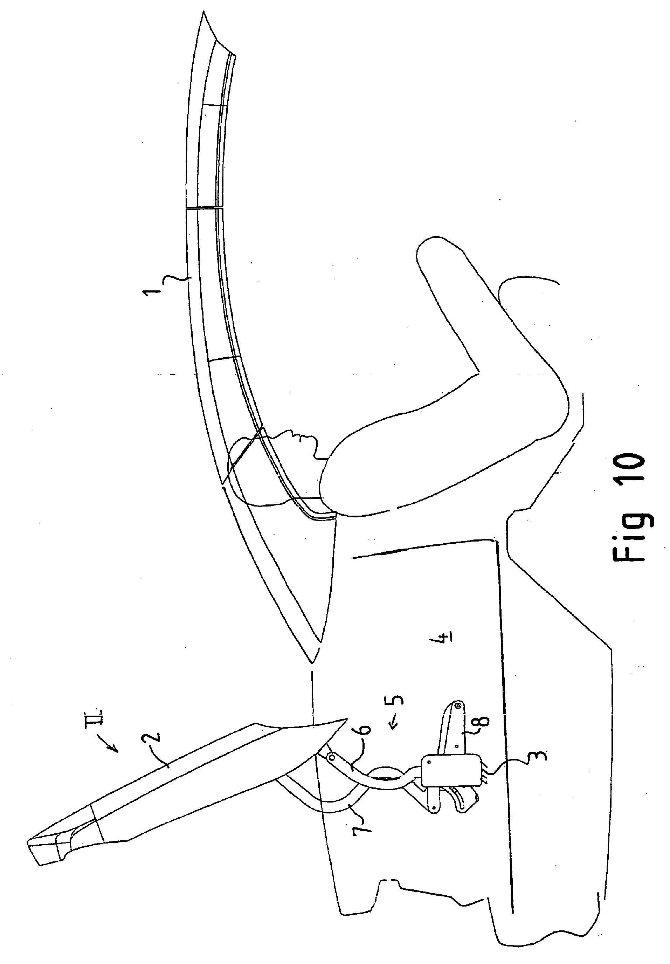

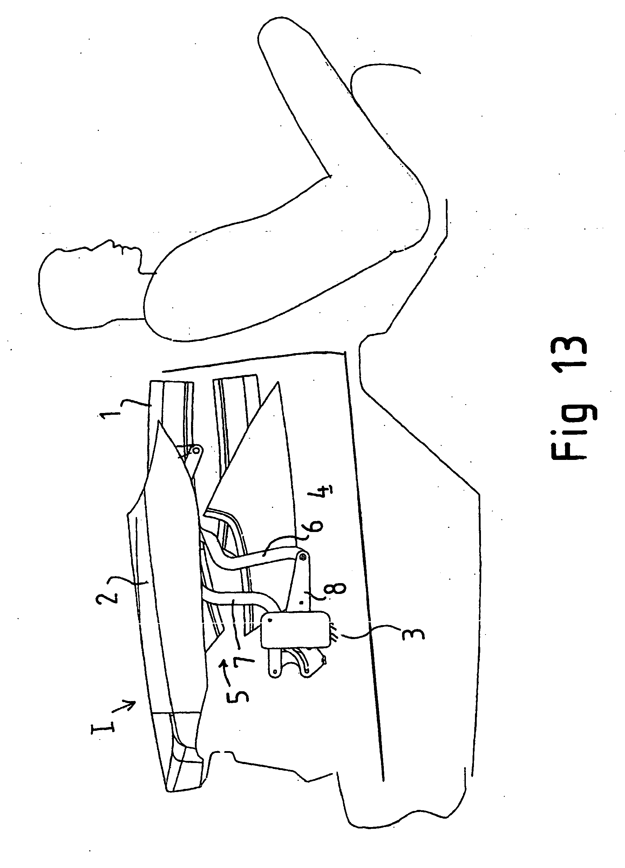

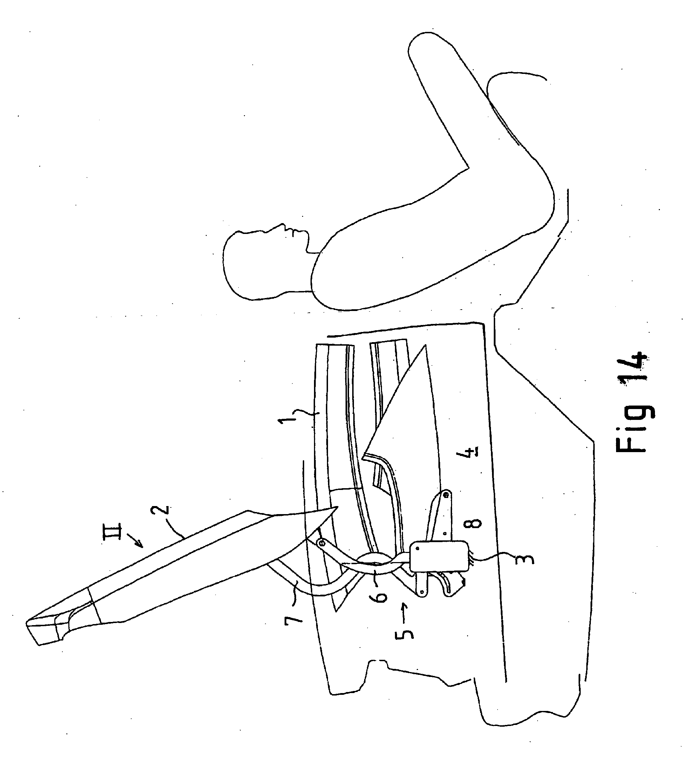

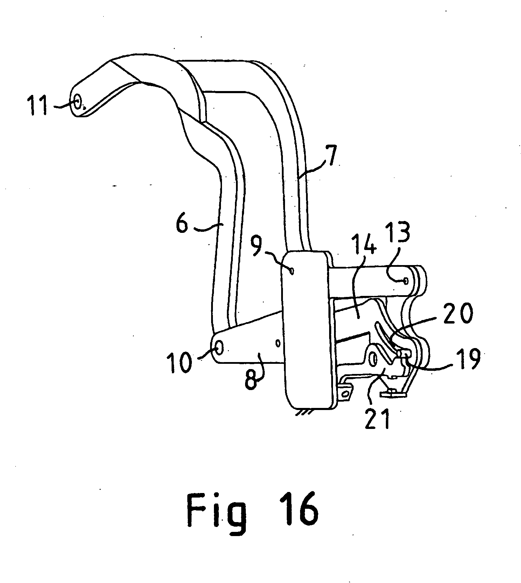

Figures 1 - 18 and 16 show the actuating mechanism 5 in different positions, which mechanism can be used to move the trunk lid 2 into the positions shown in Fig. 9 - 14.

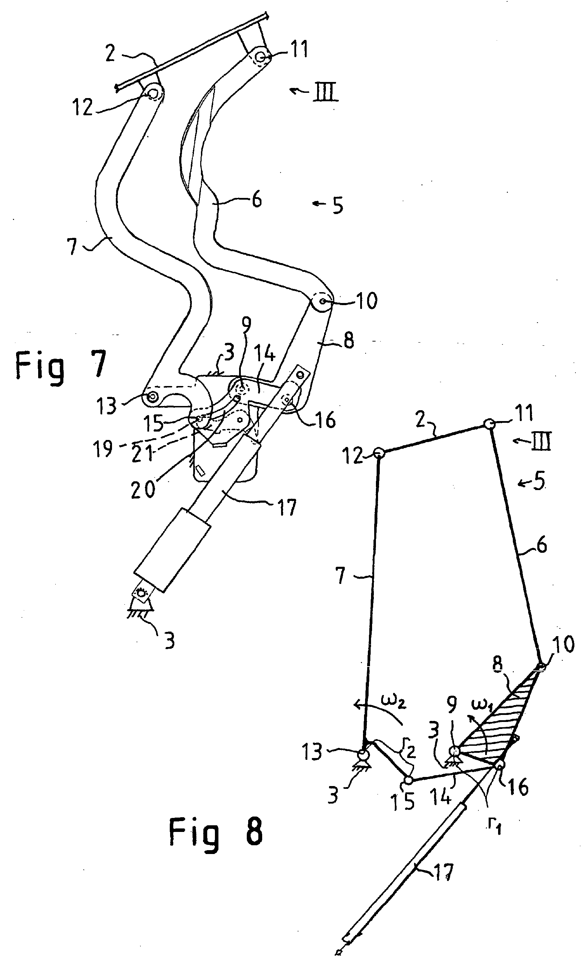

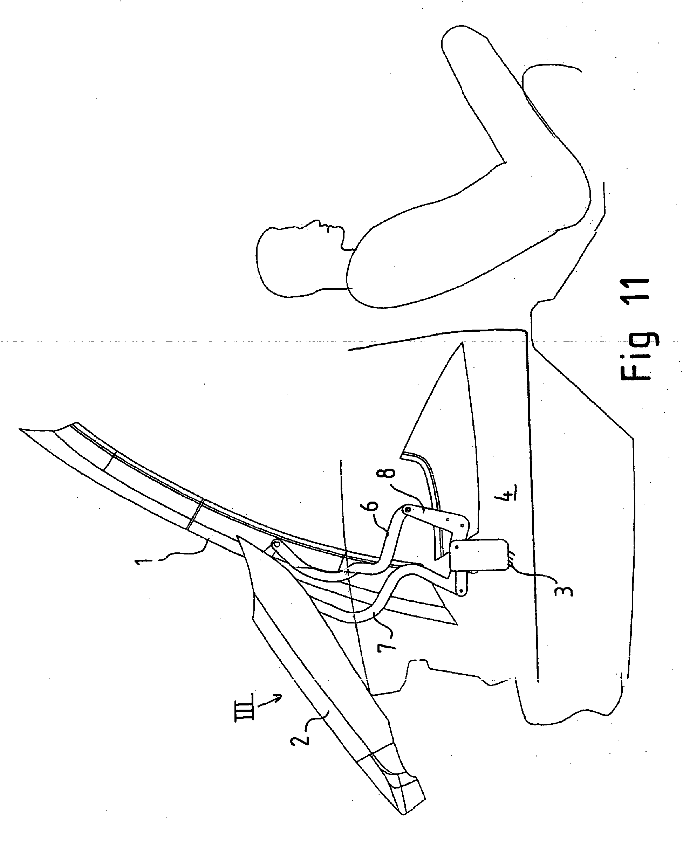

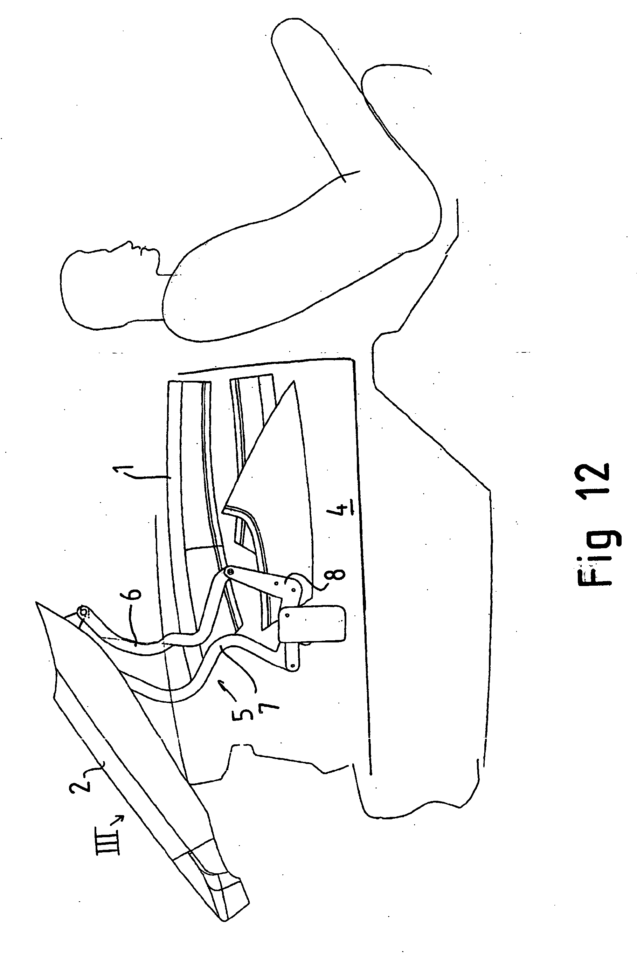

The trunk lid arrangement comprises a lid 2 which can be turned from a closed position I as shown in Fig. 1, 2, 5, 6, 9 and 13 into a first opened position II oblique in relation to the body 3 of the convertible in which the rearward end of the lid is in a raised position allowing the trunk space 4 to be accessed, i.e. loaded and unloaded from the rear. In Fig. 3, 3, 4, 10 and 14, the lid 2 is shown in a first opened position II. Alternatively, the lid 2 can also be turned relative to the body into a second opened position III, which is shown in Fig. 7 and 8 and in Fig. 11 and 12. The second opened position III allows the roof 1 to be lowered by the front side of the lid 2 into its stowage space in the trunk 4 and similarly to be raised from said stowage space.

The lid 2 is supported on the body 3 by an actuating mechanism 5 so that it can be turned between the closed position I and alternatively the first opened position II or the second opened position III.

Referring especially to Fig. 1 - 8, the actuating mechanism 5 comprises a front lever 6 and a rear lever 7, which are pivotally connected to the body 3 and the lid 2. The mechanism 5 comprises an operating lever 8, which is pivotally connected at one end by a first joint 9 to the body 3 or to some other fixed structure relative to the body. The mechanism comprises an extendable/retractable-type power means 17 arranged between the operating lever 8 and the body 3, which can be used to turn the operating lever 8 and thereby the whole mechanism. The lower end of the front lever 6 is pivotally connected to the operating lever 8 via a second joint 10 at a distance from the first joint 9 while the upper end is pivotally connected via a third joint 11 to the lid 2. The upper end of the rear lever 7 is pivotally connected via a fifth joint 12 to the lid 2, and its lower end is pivotally connected to be body or to a fixed structure relative to the body via fifth joint 13 at a distance from first joint 9. In addition, the actuating mechanism 5 comprises a connecting element 14, whose one end is pivotally connected via a sixth joint 15 to the rear lever 7 while the other end is pivotally connected to the operating lever 8 via a seventh joint 16.

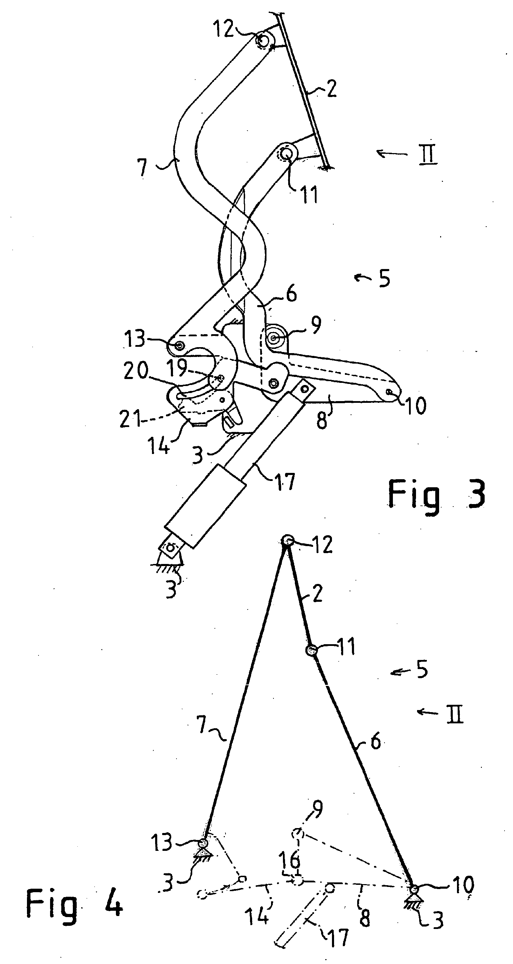

By holding the operating lever 8 in the position shown in Fig. 1 - 4 by using suitable holding means, such an actuating mechanism 5 can be applied as simple four-bar linkage mechanism as visualized in Fig. 2 and 4, in which the parts involved in the linkage movement are depicted with solid lines while the parts not involved and held immovable are depicted with broken lines. Since the operating lever 8 and the connecting element 14 remain immovable, the pivotal axes of the four-bar linkage mechanism consist of the second joint 10, the third joint 11, the fourth joint 12 and the fifth joint 13. The lid 2 now moves between the closed position I (Fig. 1 and 2) and the first opened position II (Fig. 3 and 4). The aforesaid holding means may consist of e.g. an external locking device 18 as presented in Fig. 15, comprising a bolt 23 that can be pushed into a hole 22 in the operating lever 8. No external locking device 18 is needed if the power means 17 is a device of self-locking type, such as a linear motor, a self-locking hydraulic cylinder or the like.

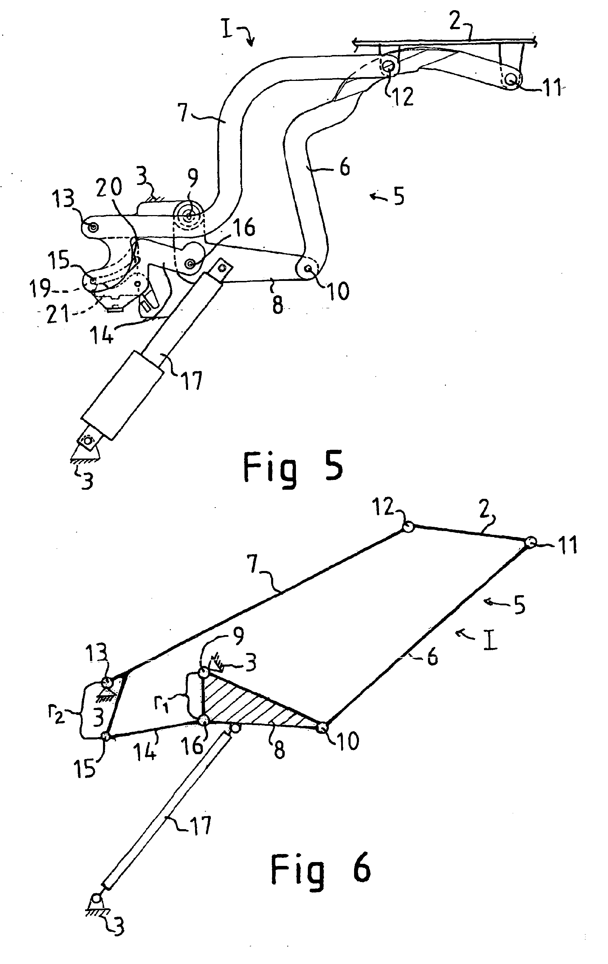

When the actuating mechanism 5 is to be opened from closed position I shown in Fig. 9 to the second opened position II shown in Fig. 12, then if the locking device 18 is of external type, the locking device is caused to release the operating lever 8 so as to allow it to turn freely about the first joint, and/or, if a self-locking power means 17 is used, power means 17 is only extended to turn the operating lever 8 about the first joint 9. In this situation, as the operating lever 8 is being turned, the actuating mechanism 5 functions as a five-bar mechanism controlled in a pre-defined way by the connecting element 14 as visualized in Fig. 6 and 8, the pivotal axes of the mechanism consisting of the first 9, second 10, third 11, fourth 11 and fifth 13 joints, to move the lid 2 between the first position I and the third position III.

The function mode of the actuating mechanism can thus be changed so that it will work alternatively as a four-bar linkage mechanism to turn the lid 2 between the closed position I and the first opened position II or as a five-bar linkage mechanism to turn the lid between the closed position I and the second opened position III.

As shown in Fig. 1, 3, 5, 7 and 16, the rear lever 7 and the connecting element 14 are connected to each other by a pin-slot mechanism, which consists of a pin 19 connected to the rear lever 7 at a distance from fifth joint 13 and a circular-arc shaped slot 20 made in the connecting element 14, in which slot the pin 19 can move. When the pin 19 is at an extreme end of the slot 20 (see Fig. 5 - 8), the pin 19 leaning against said extreme end constitutes a sixth joint 15 between the rear lever 7 and the connecting element 14 to allow application as a five-bar linkage mechanism. The actuating mechanism 5 additionally comprises a locking element 21 fitted to lock the pin 19 at said extreme end of the slot 20 to form said sixth joint 15, so that the movement of the pin 19 in the slot 20 is prevented, see Fig. 7. When the lid is closed, the rear lever 7 is disengaged from the connecting element 14 either mechanically or by external control.

As can be seen from Fig. 1 - 4, when the operating lever 8 and the connecting element 14 pivotally linked to it are held stationary, the pin-slot mechanism 19, 20 allows the rear lever 7 to turn with respect to the immovable connecting element 14.

Furthermore, referring to Fig. 8, the distance r₁ between the pivotal axes of the first joint 9 and the seventh joint 16 is smaller than the distance r₂ between the pivotal axes of the fifth joint 13 and the sixth joint 15, which means that the angular velocity ω₂ of the rear lever 7 is smaller than the alternatively of the operating lever 8 ω₁. By altering the ratio between radiuses r₁ and r₂, it is possible to achieve different ratios of change of the angular velocity ω₂ of the rear lever 7 and the angular velocity ω₁ of the operating lever 8.

In practice, the convertible is provided with a pair of actuating mechanisms 5 for moving the lid 2, the two actuating mechanisms 5 being mounted symmetrically opposite to each other on the side walls forming the lateral confines of the trunk 4. In addition, the actuating mechanisms 5 are disposed in the rear part of the trunk 4 in an area behind the roof stowage space. With this arrangement, they do not occupy any space needed for the roof 1, nor do they significantly reduce the trunk space.

The invention is not limited to the embodiment examples described above; instead, many variations are possible within the scope of the inventive concept defined in the claims.

## Claims

1. Trunk lid arrangement for a convertible vehicle provided with a foldable roof (1), said trunk lid arrangement comprising
- a trunk lid (2), which can be turned from a closed position (I) into a first opened position (II) inclined with respect to the body of the convertible and allowing access to the trunk (4) from the rear, and alternatively into a second opened position (III) allowing the folding roof to be lowered from the front side of the trunk lid into a roof stowage space in the trunk and correspondingly to be raised from said stowage space, and
- an actuating mechanism (5) connecting the trunk lid to the body so as to allow it to be turned between the closed position (I) and alternatively the first position (II) or the second position (III), said actuating mechanism comprising a four-bar linkage mechanism,
**characterized in that** the actuating mechanism (5) comprises function mode changing means for setting the functioning mode of the actuating mechanism either to a four-bar linkage mode for turning the trunk lid (2) between the closed position (I) and the first opened position (II) or to a five-bar linkage mode for turning the trunk lid between the closed position (I) and the second opened position (III).

2. Trunk lid arrangement according to claim 1, **characterized in that** the actuating mechanism (5) comprises a front lever (6) and a rear lever (7), which are pivotally connected to the body (3) and to the trunk lid (2).

3. Trunk lid arrangement according to claim 2, **characterized in that** the function mode changing means comprise an operating lever (8) pivotally connected by a first joint (9) at one end to the body (3) or to a fixed structure relative to the body.

4. Trunk lid arrangement according to claim 2 or 3, **characterized in that**
- the lower end of the front lever (6) is pivotally connected by a second joint (10) to the operating lever (8) at a distance from the first joint (9), and the upper end is pivotally connected by a third joint (11) to the trunk lid (2); and that
- the upper end of the rear lever (7) is pivotally connected by a fourth joint (12) to the trunk lid (2), and its lower end is pivotally connected by a fifth joint (13) to the body or to an immovable structure relative to the body at a distance from the first joint (9).

5. Trunk lid arrangement according to claim 4, **characterized in that** the function mode changing means comprise a connecting element (14) pivotally connected at one end by a sixth joint (15) to the rear lever (7) and at the other end by a seventh joint (16) to the operating lever (8).

6. Trunk lid arrangement according to claim 5, **characterized in that** the function mode changing means comprise holding means for holding the operating lever (8) immovable to allow the actuating mechanism to be used as a four-bar linkage mechanism comprising pivots consisting of the second (10), third (11), fourth (12) and fifth (13) joints for moving the trunk lid (2) between the first position (I) and the second position (II).

7. Trunk lid arrangement according to claim 6, **characterized in that** the actuating mechanism (5) comprises a power means (17) for turning the operating lever (8), and when the operating lever is being turned, the actuating mechanism functions as a five-bar linkage mechanism controlled in a pre-defined way by the connecting element (14) and having pivots consisting of the first (9), second (10), third (11), fourth (12) and fifth (13) joints, for moving the trunk lid (2) between the closed position (I) and the second position (III).

8. Trunk lid arrangement according to claim 7, **characterized in that** the holding means for holding the operating lever (8) immovable consist of a power means (17) of self-locking type.

9. Trunk lid arrangement according to claim 8, **characterized in that** the power means (17) of self-locking type is a linear motor, a self-locking hydraulic cylinder or the like.

10. Trunk lid arrangement according to claim 7, **characterized in that** the holding means for holding the operating lever (8) immovable comprise a locking means (18) that is separate from the power means (17).

11. Trunk lid arrangement according to any one of claims 2 - 10, **characterized in that** the rear lever (7) and the connecting element (14) are connected to each other via a pin-slot mechanism consisting of a pin (19) connected to the rear lever at a distance from the fifth joint (13) and a circular-arc shaped slot (20) in the connecting element (14), allowing the pin to move in the slot; and that when the pin is at an extreme end of the slot (20), the pin leaning against the slot extremity forms a sixth joint (15) between the rear lever and the connecting element for five-bar operation, while in four-bar operation, the operating lever (8) and the connecting element (14) pivoted on it being held immovable, the pin-slot mechanism permits the rear lever (7) to turn in relation to the connecting element (14) remaining immovable.

12. Trunk lid arrangement according to claim 11, **characterized in that** the actuating mechanism (5) comprises a locking element (21) fitted to lock the pin (9) at said extreme end of the slot (20) to form said sixth joint (15) so that the pin is prevented from moving in the slot.

13. Trunk lid arrangement according to any one of claims 4 - 12, **characterized in that** the distance (r₁) between the pivotal axes of the first joint (9) and the seventh joint (16) is different from the distance (r₂) between the pivotal axes of the fifth joint (13) and the sixth joint (14).

14. Trunk lid arrangement according to any one of claims 4 - 12, **characterized in that** the distance (r₁) between the pivotal axes of the first joint (9) and the seventh joint (16) is smaller than the distance (r₂) between the pivotal axes of the fifth joint (13) and the sixth joint (15), in which case the angular velocity (ω₂) of rear lever (7) is smaller than the angular velocity (ω₁) of the operating lever (8).

15. Trunk lid arrangement according to any one of claims 1 - 14, **characterized in that** the trunk lid arrangement comprises two actuating mechanisms (5), which are mounted symmetrically opposite to each other on the side walls forming the lateral confines of the trunk (4) and which are disposed in the rear part of the trunk in an area behind the roof stowage space.

## Patentansprüche

1. Kofferraumdeckeleinrichtung für ein Cabriolet, das mit einem faltbaren Dach (1) ausgestattet ist, wobei die Kofferraumdeckeleinrichtung aufweist:
- einen Kofferraumdeckel (2), der aus einer geschlossenen Stellung (I) in eine erste geöffnete Stellung (II) geschwenkt werden kann, die im Hinblick auf die Karosserie des Cabriolets geneigt ist und einen Zugriff auf den Kofferraum (4) von der Rückseite her zulässt, und alternativ in eine zweite geöffnete Stellung (III) geschwenkt werden kann, die es zulässt, dass das Faltdach von der Vorderseite des Kofferraumdeckels her in einen Dachstauraum im Kofferraum abgesenkt und entsprechend aus dem Stauraum angehoben werden kann, und
- einen Betätigungsmechanismus (5), der den Kofferraumdeckel so mit der Karosserie verbindet, dass er sich zwischen der geschlossenen Stellung (I) und alternativ der ersten Stellung (II) oder der zweiten Stellung (III) schwenken lässt, wobei der Betätigungsmechanismus einen Vierstangen-Gelenkmechanismus aufweist, **dadurch gekennzeich net**, dass der Betätigungsmechanismus (5) Funktionsartumstelleinrichtungen aufweist, um die Funktionsart des Betätigungsmechanismus entweder auf eine Vierstangen-Gelenkbetriebsart einzustellen, um den Kofferraumdeckel (2) zwischen der geschlossenen Stellung (I) und der ersten geöffneten Stellung (II) zu schwenken, oder auf eine Fünfstangen-Gelenkbetriebsart, um den Kofferraumdeckel zwischen der geschlossenen Stellung (I) und der zweiten geöffneten Stellung (III) zu schwenken.

2. Kofferraumdeckeleinrichtung nach Anspruch 1,
**dadurch gekennzeichnet, dass** der Betätigungsmechanismus (5) einen vorderen Hebel (6) und einen hinteren Hebel (7) aufweist, die an der Karosserie (3) und dem Kofferraumdeckel (2) angelenkt sind.

3. Kofferraumdeckeleinrichtung nach Anspruch 2,
**dadurch gekennzeichnet, dass** die Funktionsartumstelleinrichtung einen Bedienungshebel (8) aufweist, der durch ein erstes Gelenk (9) an einem Ende an der Karosserie (3) oder einer in Bezug auf die Karosserie feststehenden Struktur angelenkt ist.

4. Kofferraumdeckeleinrichtung nach Anspruch 2 oder 3,
**dadurch gekennzeichnet, dass**
- das untere Ende des vorderen Hebels (6) ) in einem Abstand vom ersten Gelenk (9) durch ein zweites Gelenk (10) am Bedienungshebel (8) angelenkt ist, und das obere Ende durch ein drittes Gelenk (11) am Kofferraumdeckel (2) angelenkt ist; und dass
- das obere Ende des hinteren Hebels (7) durch ein viertes Gelenk (12) am Kofferraumdeckel (2) angelenkt ist, und sein unteres Ende in einem Abstand vom ersten Gelenk (9) durch ein fünftes Gelenk (13) an der Karosserie oder einer in Bezug auf die Karosserie unbeweglichen Struktur angelenkt ist.

5. Kofferraumdeckeleinrichtung nach Anspruch 4,
**dadurch gekennzeichnet, dass** die Funktionsartumstelleinrichtungen ein Verbindungselement (14) aufweisen, das an einem Ende durch ein sechstes Gelenk (15) am hinteren Hebel (7) und am anderen Ende durch ein siebtes Gelenk (16) am Bedienungshebel (8) angelenkt ist.

6. Kofferraumdeckeleinrichtung nach Anspruch 5,
**dadurch gekennzeichnet, dass** die Funktionsartumstelleinrichtungen Halteeinrichtungen aufweisen, um den Bedienungshebel (8) unbeweglich zu halten, um zuzulassen, dass der Betätigungsmechanismus als Vierstangen-Gelenkmechanismus verwendet werden kann, der Drehgelenke aufweist, die aus dem zweiten (10), dritten (11), vierten (12) und fünften (13) Gelenk bestehen, um den Kofferraumdeckel (2) zwischen der ersten Stellung (I) und der zweiten Stellung (II) zu bewegen.

7. Kofferraumdeckeleinrichtung nach Anspruch 6,
**dadurch gekennzeichnet, dass** der Betätigungsmechanismus (5) eine Kraftantriebseinrichtung (17) aufweist, um den Bedienungshebel (8) zu schwenken, und wenn der Bedienungshebel geschwenkt wird, der Betätigungsmechanismus als Fünfstangen-Gelenkmechanismus funktioniert, der durch das Verbindungselement (14) auf eine vordefinierte Weise gesteuert wird und Drehgelenke hat, die aus dem ersten (9), zweiten (10), dritten (11), vierten (12) und fünften (13) Drehgelenk bestehen, um den Kofferraumdeckel (2) zwischen der geschlossenen Stellung (I) und der zweiten Stellung (III) zu bewegen.

8. Kofferraumdeckeleinrichtung nach Anspruch 7,
**dadurch gekennzeichnet, dass** die Halteeinrichtungen, um den Bedienungshebel (8) unbeweglich zu halten, aus einer selbstsperrenden Kraftantriebseinrichtung (17) bestehen.

9. Kofferraumdeckeleinrichtung nach Anspruch 8,
**dadurch gekennzeichnet, dass** die selbstsperrende Kraftantriebseinrichtung (17) ein Linearmotor, ein selbstsperrender Hydraulikzylinder o. dgl. ist.

10. Kofferraumdeckeleinrichtung nach Anspruch 7,
**dadurch gekennzeichnet, dass** die Halteeinrichtungen, um den Bedienungshebel (8) unbeweglich zu halten, eine Sperreinrichtung (18) aufweisen, die separat von der Kraftantriebseinrichtung (17) ist.

11. Kofferraumdeckeleinrichtung nach einem der Ansprüche 2 bis 10,
**dadurch gekennzeichnet, dass** der hintere Hebel (7) und das Verbindungselement (14) über einen Stift-Schlitz-Mechanismus miteinander verbunden sind, der aus einem Stift (19), der in einem Abstand vom fünften Gelenk (13) an den hinteren Hebel angeschlossen ist, und einem kreisbogenförmigen Schlitz (20) im Verbindungselement (14) besteht, wobei sich der Stift im Schlitz bewegen kann; und dass, wenn sich der Stift an einem äußersten Ende des Schlitzes (20) befindet, der sich an das Schlitzende anlehnende Stift für einen Fünfstangen-Betrieb ein sechstes Gelenk (15) zwischen dem hinteren Hebel und dem Verbindungselement bildet, während im Vierstangen-Betrieb, wobei der Bedienungshebel (8) und das an ihm angelenkte Verbindungselement (14) unbeweglich gehalten werden, der Stift-Schlitz-Mechanismus den hinteren Hebel (7) sich in Bezug auf das unbeweglich bleibende Verbindungselement (14) schwenken lässt.

12. Kofferraumdeckeleinrichtung nach Anspruch 11,
**dadurch gekennzeichnet, dass** der Betätigungsmechanismus (5) ein Sperrelement (21) aufweist, das so eingebaut ist, dass der Stift am äußersten Ende des Schlitzes (20) angebracht wird, um das sechste Gelenk (15) zu bilden, so dass der Stift daran gehindert ist, sich im Schlitz zu bewegen.

13. Kofferraumdeckeleinrichtung nach einem der Ansprüche 4 bis 12,
**dadurch gekennzeichnet, dass** sich der Abstand (r₁) zwischen den Gelenkachsen des ersten Gelenks (9) und des siebten Gelenks (16) von dem Abstand (r₂) zwischen den Gelenkachsen des fünften Gelenks (13) und des sechsten Gelenks (14) unterscheidet.

14. Kofferraumdeckeleinrichtung nach einem der Ansprüche 4 bis 12,
**dadurch gekennzeichnet, dass** der Abstand (r₁) zwischen den Gelenkachsen des ersten Gelenks (9) und des siebten Gelenks (16) kleiner ist als der Abstand (r₂) zwischen den Gelenkachsen des fünften Gelenks (13) und des sechsten Gelenks (15), wobei dann die Winkelgeschwindigkeit (ω₂) des hinteren Hebels (7) geringer ist als die Winkelgeschwindigkeit (ω₁) des Bedienungshebels (8).

15. Kofferraumdeckeleinrichtung nach einem der Ansprüche 1 bis 14,
**dadurch gekennzeichnet, dass** die Kofferraumdeckeleinrichtung zwei Betätigungsmechanismen (5) aufweist, die symmetrisch einander gegenüberliegend an den Seitenwänden angebracht sind, welche die seitlichen Begrenzungen des Kofferraums (4) bilden, und die im hinteren Teil des Kofferraums in einem Bereich hinter dem Dachstauraum angeordnet sind.

## Revendications

1. Agencement de couvercle de coffre, pour un véhicule convertible muni d'un toit repliant (1), ledit agencement de couvercle de coffre comprenant :
- un couvercle de coffre (2), pouvant être tourné, d'une position fermée (I) en une première position d'ouverture (II), inclinée par rapport à la carrosserie du véhicule convertible et permettant l'accès au coffre (4) depuis l'arrière et, alternativement, en une deuxième position d'ouverture (III), permettant d'abaisser le toit pliant depuis le côté avant du couvercle de coffre, dans un espace de rangement de toit, situé dans le coffre, et, de manière correspondante, d'être levé dudit espace de rangement, et
- un mécanisme d'actionnement (5), connectant le couvercle de coffre à la carrosserie, de manière à lui permettre d'être tourné, entre la position fermée (I) et, alternativement, la première position (II) ou la deuxième position (III), ledit mécanisme d'actionnement comprenant un mécanisme de liaison à quatre barres, **caractérisé en ce que** le mécanisme d'actionnement (5) comprend des moyens de changement de mode fonctionnel, pour mettre le mode fonctionnel du mécanisme d'actionnement, soit en mode de liaison à quatre barres, pour faire pivoter le couvercle de coffre (2) entre la position fermée (I) et la première position d'ouverture (II), soit un mode de liaison à cinq barres, pour faire pivoter le couvercle de coffre entre la position fermée (I) et la deuxième position d'ouverture (III).

2. Agencement de couvercle de coffre selon la revendication 1, **caractérisé en ce que** le mécanisme d'actionnement (5) comprend un levier avant (6) et un levier arrière (7), reliés à pivotement à la carrosserie (3) et au couvercle de coffre (2).

3. Agencement de couvercle de coffre selon la revendication 1, **caractérisé en ce que** les moyens de changement de mode fonctionnel comprennent un levier d'actionnement (8), relié à pivotement par une première articulation (9), à une extrémité, à la carrosserie (3) ou à une structure fixée à la carrosserie.

4. Agencement de couvercle de coffre selon la revendication 2 ou 3, **caractérisé en ce que** :
- l'extrémité inférieure du levier avant (6) est reliée à pivotement, par une deuxième articulation (10), au levier d'actionnement (8), à une certaine distance vis-à-vis de la première articulation (9), et l'extrémité supérieure est reliée à pivotement, par une troisième articulation (11), au couvercle de coffre (2) ; et **en ce que**
- l'extrémité supérieure du levier arrière (7) est reliée à pivotement, par une quatrième articulation (12), au couvercle de coffre (2), et son extrémité inférieure est reliée à pivotement, par une cinquième articulation (13), à la carrosserie ou à une structure immobile par rapport à la carrosserie, à une certaine distance vis-à-vis de la première articulation (9).

5. Agencement de couvercle de coffre selon la revendication 4, **caractérisé en ce que** les moyens de changement de mode fonctionnel comprennent un élément de connexion (14), relié à pivotement, à une première extrémité, par une sixième articulation (15), au levier arrière (7) et, à l'autre extrémité, par une septième articulation (16), au levier d'actionnement (8).

6. Agencement de couvercle de coffre selon la revendication 5, **caractérisé en ce que** les moyens de changement de mode fonctionnel comprennent des moyens de maintien, pour maintenir le levier d'actionnement (8) immobile, pour permettre au mécanisme d'actionnement d'être utilisé comme mécanisme de liaison à quatre barres, comprenant des pivots composés des deuxième (10), troisième (11), quatrième (12) et cinquième (13) articulations, pour déplacer le couvercle de coffre (2) entre la première position (I) et la deuxième position (II).

7. Agencement de couvercle de coffre selon la revendication 6, **caractérisé en ce que** le mécanisme d'actionnement (5) comprend des moyens de puissance (17), pour faire tourner le levier d'actionnement (8) et, lorsque le levier d'actionnement a été tourné, le mécanisme d'actionnement sert de mécanisme de liaison à cinq barres, commandé d'une manière prédéfinie par l'élément de liaison (14) et comprenant des pivots composés des première (9) deuxième (10), troisième (11), quatrième (12) et cinquième (13) articulations, pour déplacer le couvercle de coffre (2) entre la position fermée (I) et la deuxième position (III).

8. Agencement de couvercle de coffre selon la revendication 7, **caractérisé en ce que** les moyens de maintien, pour maintenir le levier d'actionnement (8) immobile, sont composés de moyens motorisés (17), de type à autoblocage.

9. Agencement de couvercle de coffre selon la revendication 8, **caractérisé en ce que** les moyens de puissance (17), de type à autoblocage, sont un moteur linéaire, un vérin hydraulique à autoblocage, ou analogue.

10. Agencement de couvercle de coffre selon la revendication 7, **caractérisé en ce que** les moyens de maintien, pour maintenir le levier d'actionnement (8) immobile, comprennent des moyens de verrouillage (18), séparés des moyens de puissance (17).

11. Agencement de couvercle de coffre selon l'une quelconque des revendications 2 à 10, **caractérisé en ce que** le levier arrière (7) et l'élément de liaison (4) sont reliés l'un à l'autre, via un mécanisme à tige et fente, composé d'une tige (19), relié au levier arrière, à une certaine distance de la cinquième articulation (13), et d'une fente (20) en forme d'arc de cercle, ménagée dans l'élément de liaison (14), permettant à la tige de se déplacer dans la fente ; et **en ce que**, lorsque la tige se trouve à une extrémité de la fente (20), l'appui de la tige contre l'extrémité de la fente forme, en position extrême, une sixième articulation (15), entre le levier arrière et l'élément de liaison, pour un fonctionnement à cinq barres, tandis que, dans un fonctionnement à quatre barres, le levier d'actionnement (8), et l'élément de liaison (14) pivoté sur lui, étant maintenus immobiles, le mécanisme à tige et fente permettant au levier arrière (7) d'être pivoté par rapport à l'élément de liaison (14) restant immobile.

12. Agencement de couvercle de coffre selon la revendication 11, **caractérisé en ce que** le mécanisme d'actionnement (5) comprend un élément de verrouillage (21), monté pour verrouiller la tige (9) à ladite extrémité de la fente (20), pour former ladite sixième articulation, de manière que la tige soit empêchée de se déplacer dans la fente.

13. Agencement de couvercle de coffre selon l'une quelconque des revendications 4 à 12, **caractérisé en ce que** la distance (r₁), entre les axes de pivotement de la première articulation (9) et la septième articulation (16), est différente de la distance (r₂), entre les axes de pivotement de la cinquième articulation (13) et la sixième articulation (14).

14. Agencement de couvercle de coffre selon l'une quelconque des revendications 4 à 12, **caractérisé en ce que** la distance (r₁), entre les axes de pivotement de la première articulation (9) et la septième articulation (16), est inférieure à la distance (r₂), entre les axes de pivotement de la cinquième articulation (13) et la sixième articulation (15), dans ce cas la vitesse angulaire (ω₂) du levier arrière (7) est inférieure à la vitesse angulaire (ω₁) du levier d'actionnement (8).

15. Agencement de couvercle de coffre selon l'une quelconque des revendications 2 à 14, **caractérisé en ce que** l'agencement de couvercle de coffre comprend deux mécanismes d'actionnement (5), montés de façon symétriquement opposée à chaque autre sur les parois latérales formant les confins latéraux du coffre (4) et disposés dans la partie arrière du coffre, dans une zone située derrière l'espace de rangement de toit.
